# EUROPÄISCHE PATENTANMELDUNG

(11) **EP 2 058 484 A1**
(43) Veröffentlichungstag der Anmeldung: **13.05.2009**
(21) Anmeldenummer: 07120270.9
(22) Anmeldetag: 08.11.2007
(51) Int. Cl.: F02B 37/00, F01N 7/10, F02C 6/12

(54) **Aufgeladene Brennkraftmaschine**

(71) Anmelder: Ford Global Technologies, LLC, Dearborn, MI 48126 (US)
(72) Erfinder: Spaeder, Uwe, 52072, Aachen (DE); Schorn, Norbert, 52080, Aachen (DE); Kindl, Helmut, 52066, Aachen (DE); Smiljanovski, Vanco, 50181, Bedburg (DE); Stalman, Rob, 52538, Selfkant (DE)
(74) Vertreter: Dörfler, Thomas

(57) **Zusammenfassung**

Die Erfindung betrifft eine aufgeladene Brennkraftmaschine (1) mit
■ einem Zylinderkopf (3) mit mindestens zwei Zylindern (3a), von denen jeder mindestens eine Auslaßöffnung aufweist, an die sich eine Abgasleitung (4a) zum Abführen der Abgase aus diesem Zylinder (3a) anschließt, wobei die Abgasleitungen (4a) der mindestens zwei Zylinder (3a) unter Ausbildung eines Abgaskrümmers (4) zu einer Gesamtabgasleitung (5) zusammenführen, und
■ mindestens einem Abgasturbolader (7), der eine Turbine (7a) umfaßt, welche ein auf einer Welle (8) vorgesehenes Laufrad (11), einen Eintrittsbereich (9) zur Zuführung des Abgases und einen Austrittsbereich (10) zur Abführung des Abgases aufweist.

Es soll eine aufgeladene Brennkraftmaschine (1) der oben genannten Art bereitgestellt werden, bei der die Abgasströmung möglichst verlustarm d. h. unter möglichst geringen Energieeinbußen bis zur Turbine (7a) geleitet wird, so dass an der Turbine (7a) ein möglichst energiereiches Abgas bereitsteht.

Erreicht wird dies durch eine Brennkraftmaschine (1), die dadurch gekennzeichnet ist, dass
■ die Turbine (7a) eine Axialturbine (2) ist, wobei der Eintrittsbereich (9) der Axialturbine (2) koaxial zur Welle (8) der Axialturbine (2) verläuft und ausgebildet ist, so dass die Zuströmung des Abgases zur Turbine (7a) im wesentlichen axial erfolgt, und
■ stromaufwärts der Turbine (7a) kein weiteres Aggregat angeordnet ist.

## Beschreibung

Die Erfindung betrifft eine aufgeladene Brennkraftmaschine mit einem Zylinderkopf mit mindestens zwei Zylindern, von denen jeder mindestens eine Auslaßöffnung aufweist, an die sich eine Abgasleitung zum Abführen der Abgase aus diesem Zylinder anschließt, wobei die Abgasleitungen der mindestens zwei Zylinder unter Ausbildung eines Abgaskrümmers zu einer Gesamtabgasleitung zusammenführen, und mindestens einem Abgasturbolader, der eine Turbine umfaßt, welche ein auf einer Welle vorgesehenes Laufrad, einen Eintrittsbereich zur Zuführung des Abgases und einen Austrittsbereich zur Abführung des Abgases aufweist.

Im Rahmen der vorliegenden Erfindung umfaßt der Begriff Brennkraftmaschine insbesondere Dieselmotoren, aber auch Ottomotoren und Hybrid-Brennkraftmaschinen.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck pₘₑ gesteigert werden.

Die Aufladung ist daher ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, den Kraftstoffverbrauch zu minimieren, d. h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen.

Weitere Ziele bei der Entwicklung von aufgeladenen Brennkraftmaschinen sind die Verbesserung des Ansprechverhaltens beim instationären Betrieb der Brennkraftmaschine und die Verbesserung der Drehmomentcharakteristik im unteren Drehzahlbereich.

Nach dem Stand der Technik wird nämlich ein spürbarer Drehmomentabfall bei Unterschreiten einer bestimmten Drehzahl beobachtet. Dieser Effekt ist unerwünscht und zählt zu den gravierendsten Nachteilen der Abgasturboaufladung.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, dass zur Verbesserung der Drehmomentcharakteristik mehrere Turbolader eingesetzt werden.

Gegenstand der vorliegenden Erfindung ist eine Brennkraftmaschine, die mindestens einen Abgasturbolader aufweist, wobei auch zwei oder drei Abgasturbolader vorhanden sein können.

Grundsätzlich ist man bemüht, die Turbine des Abgasturboladers möglichst nahe am Auslaß der Brennkraftmaschine anzuordnen, um auf diese Weise die Abgasenthalpie der heißen Abgase - unter sämtlichen Betriebszuständen der Brennkraftmaschine - optimal nutzen zu können. Die Abgase sollten sich bis zum Eintritt in die Turbine möglichst wenig abkühlen.

In diesem Zusammenhang wird es als zielführend angesehen, die thermische Trägheit des Teilstücks der Abgasleitungen zwischen den Zylindern und der Turbine zu minimieren, was durch Reduzierung der Masse und der Länge dieses Teilstückes erreicht wird. Dabei wird auch die Gesamtwegstrecke aller Abgasleitungen verkürzt und das Abgasvolumen zwischen den Zylinder und der Turbine verkleinert, so dass das Ansprechverhalten der Turbine bzw. des Turboladers verbessert wird. Zusätzlich wird durch diese Maßnahmen das Gewicht reduziert und ein effektiveres Packaging im Motorraum ermöglicht.

Um die Abgasenergie möglichst effizient nutzen zu können, sollte das Abgas bzw. sollten die Abgasströmungen des weiteren nicht häufig umgelenkt werden bzw. möglichst geringfügige Richtungsänderungen erfahren. Jede Richtungsänderung der Abgasströmung - beispielsweise infolge einer Krümmung der Abgasleitung - hat einen Druckverlust in der Abgasströmung und damit einen Energieverlust zur Folge.

Aus demselben Grund sollte auch alles andere vermieden werden, was den Druck im Abgas reduziert und die an der Turbine noch zur Verfügung stehende Abgasenergie verringert. So sollte stromaufwärts der Turbine kein weiteres Aggregat vorgesehen sein, insbesondere kein Abgasnachbehandlungssystem und keine weitere Turbine. Ein stromaufwärts der Turbine vorgesehenes Aggregat würde wie ein Drosselelement wirken und den Druck im Abgas senken.

Nach dem Stand der Technik wird die Turbine eines Abgasturboladers in der Regel als Radialturbine ausgeführt d.h. die Anströmung der Laufschaufeln erfolgt im wesentlichen radial. "Im wesentlichen radial" bedeutet im Rahmen der vorliegenden Erfindung, dass die Geschwindigkeitskomponente in radialer Richtung größer ist als die axiale Geschwindigkeitskomponente. Der Geschwindigkeitsvektor der Strömung schneidet die Welle bzw. Achse des Abgasturboladers und zwar in einem rechten Winkel, falls die Anströmung exakt radial verläuft.

Um die Laufschaufeln radial anströmen zu können, wird der Eintrittsbereich zur Zuführung des Abgases nach dem Stand der Technik als rundum verlaufendes Spiral- oder Schneckengehäuse ausgebildet, so dass die Zuströmung des Abgases zur Turbine im wesentlichen radial erfolgt. Eine derartige Radialturbine wird beispielsweise in der EP 1 710 415 A1 beschrieben.

Die Zuführung des Abgases mittels Spiral- oder Schneckengehäuse erfordert die mehrfache Umlenkung des Abgases bzw. der Abgasströmungen mit großen Richtungsänderungen. Wie oben bereits ausgeführt, bedingt aber jede Richtungsänderung einen Druckverlust in der Abgasströmung, weshalb dem Abgas an der Turbine weniger Energie entzogen werden kann.

Gelegentlich wird die Turbine eines Abgasturboladers auch als Axialturbine ausgeführt d.h. die Anströmung der Laufradschaufeln erfolgt im wesentlichen axial. "Im wesentlichen axial" bedeutet im Rahmen der vorliegenden Erfindung, dass die Geschwindigkeitskomponente in axialer Richtung größer ist als die radiale Geschwindigkeitskomponente. Der Geschwindigkeitsvektor der Anströmung im Bereich des Laufrades verläuft dabei vorzugsweise parallel zur Welle bzw. Achse des Abgasturboladers, falls die Anströmung exakt axial verläuft.

Nach dem Stand der Technik wird aber auch bei Axialturbinen der Eintrittsbereich zur Zuführung des Abgases als rundum verlaufendes Spiral- oder Schneckengehäuse ausgebildet, so dass zumindest im Eintrittsbereich die Strömung des Abgases schräg bzw. radial zur Welle verläuft bzw. geführt wird, was zu - den oben bereits mehrfach erwähnten - Einbußen bei der an der Turbine zur Verfügung stehenden Abgasenthalpie führt. Die EP 1 710 415 A1 beschreibt eine derartige Axialturbine.

Vor diesem Hintergrund ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und bei der die Abgasströmung möglichst verlustarm d. h. unter möglichst geringen Energieeinbußen bis zur Turbine geleitet wird, so dass an der Turbine ein möglichst energiereiches Abgas bereitsteht.

Gelöst wird diese Aufgabe durch eine aufgeladene Brennkraftmaschine mit
■ einem Zylinderkopf mit mindestens zwei Zylindern, von denen jeder mindestens eine Auslaßöffnung aufweist, an die sich eine Abgasleitung zum Abführen der Abgase aus diesem Zylinder anschließt, wobei die Abgasleitungen der mindestens zwei Zylinder unter Ausbildung eines Abgaskrümmers zu einer Gesamtabgasleitung zusammenführen, und
■ mindestens einem Abgasturbolader, der eine Turbine umfaßt, welche ein auf einer Welle vorgesehenes Laufrad, einen Eintrittsbereich zur Zuführung des Abgases und einen Austrittsbereich zur Abführung des Abgases aufweist, und die dadurch gekennzeichnet, dass
■ die Turbine eine Axialturbine ist, wobei der Eintrittsbereich der Axialturbine koaxial zur Welle der Axialturbine verläuft und ausgebildet ist, so dass die Zuströmung des Abgases zur Turbine im wesentlichen axial erfolgt, und
■ stromaufwärts der Turbine kein weiteres Aggregat angeordnet ist.

Die erfindungsgemäße Brennkraftmaschine ist mit einer Turbine in Axialbauweise ausgestattet. Dies macht die bei Radialturbinen zwingend erforderliche d. h. prinzipbedingt unumgängliche radiale Zuführung des Abgases mittels Spiral- oder Schneckengehäuse entbehrlich.

Die Anströmung der Laufschaufeln der Axialturbine erfolgt axial, wobei erfindungsgemäß die Zuführung des Abgases zur Turbine ebenfalls axial erfolgt, so dass keine Umlenkung bzw. Richtungsänderung des Abgases im Eintrittsbereich erfolgt bzw. erfolgen muß.

Hierzu verläuft der Eintrittsbereich koaxial zur Welle der Axialturbine, so dass die Zuströmung des Abgases zur Turbine im wesentlichen axial erfolgt. Eine derartige Zuführung des Abgases zur Turbine verhindert größere d.h. spürbare Druckverluste in der Abgasströmung infolge Strömungsumlenkung und führt damit zur Bereitstellung eines möglichst energiereichen Abgases an der Turbine.

Die Verwendung einer Axialturbine zusammen mit einem erfindungsgemäß ausgebildeten Eintrittsbereich gestattet zudem ein möglichst dichtes Packaging, insbesondere eine Reduzierung der Masse und der Länge der Abgasleitungen zwischen den Zylindern und der Turbine.

Vorteilhaft sind Ausführungsformen, bei denen die Gesamtabgasleitung bzw. die Abgasleitungen stromaufwärts der Turbine - turbinenseitig - parallel zur Achse der Turbinenwelle verläuft bzw. verlaufen.

Durch die erfindungsgemäße Brennkraftmaschine wird die erste der Erfindung zugrunde liegende Aufgabe gelöst, nämlich eine aufgeladene Brennkraftmaschine bereitzustellen, bei der die Abgasströmung möglichst verlustarm d.h. unter möglichst geringen Energieeinbußen bis zur Turbine geleitet wird, so dass an der Turbine ein möglichst energiereiches Abgas bereitsteht.

Die konstruktiven Parameter der Axialturbine, nämlich die Schaufelhöhe der Laufradschaufeln, der Außendurchmesser d. h. der Durchmesser des Laufrades am äußeren Umfang der Schaufeln, sowie der Innendruchmesser d. h. der Durchmesser des Laufrades an der Verbindungsstelle von Schaufel und Welle, können entsprechend den jeweils vorliegenden Gegebenheiten wie Abgasmassenstrom und Druckverhältnis einerseits und/oder dem Laufraddurchmesser des Verdichters andererseits gewählt werden.

Axialturbinen weisen gegenüber Radialturbinen weitere Vorteile auf, die sich insbesondere bei der Verwendung mit einer Brennkraftmaschine günstig auswirken. So führt der Einsatz einer Axialturbine zu einem verbesserten Ansprechverhalten der Brennkraftmaschine bzw. einer verbesserten Beschleunigung des Laufrades, insbesondere aufgrund des geringeren Trägheitsmomentes.

Das Drehmoment der Brennkraftmaschine bei niedrigen Drehzahlen erhöht sich, da Axialturbinen - im Vergleich zu Radialturbinen gleicher Durchflußkapazität - infolge ihres kleineren effektiven Strömungsquerschnittes ein verbessertes Aufstauverhalten aufweisen. Das Turbinendruckverhältnis einer Axialturbine ist dadurch größer in diesem Betriebszustand.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen der Austrittsbereich der Axialturbine im wesentlichen radial zur Welle der Axialturbine verläuft und ausgebildet ist, so dass die Abströmung des Abgases aus der Turbine im wesentlichen radial erfolgt, vorzugsweise radial.

Diese Ausführungsform gestattet das gewünschte dichte Packaging der gesamten Antriebseinheit im Motorraum, insbesondere die unmittelbare Anordnung eines Abgasnachbehandlungssystems stromabwärts der Turbine.

Neben der möglichst motornahen Anordnung der Turbine ist man auch bemüht, Abgasnachbehandlungssysteme, welche eine Mindestbetriebstemperatur erfordern, möglichst nahe am Auslaß der Brennkraftmaschine anzuordnen. Auf diese Weise soll der Weg der heißen Abgase zum Abgasnachbehandlungssystem möglichst kurz gehalten werden.

Vorteilhaft sind daher Ausführungsformen der Brennkraftmaschine, bei denen unmittelbar stromabwärts der Axialturbine mindestens ein Abgasnachbehandlungssystem angeordnet ist.

Abgasnachbehandlungssysteme, die ein bestimmtes Temperaturniveau erfordern, um ihre Funktionstüchtigkeit aufrechtzuerhalten bzw. ihre Aufgabe zu erfüllen, sind beispielsweise ein Partikelfilter, der eine Temperatur von etwa 550°C zur Regeneration benötigt, oder ein Speicherkatalysator, der eine weit höhere Temperatur zur Entschwefelung erfordert.

Oxidationskatalysatoren, welche zur Oxidation der im Abgas enthaltenen unverbrannten Kohlenwasserstoffe eingesetzt werden, sollen möglichst schnell ihre Betriebstemperatur bzw. Anspringtemperatur erreichen, insbesondere nach einem Kaltstart der Brennkraftmaschine.

Vorteilhaft sind daher Ausführungsformen der Brennkraftmaschine, bei denen das Abgasnachbehandlungssystem ein Oxidationskatalysator ist.

Vorteilhaft sind des weiteren Ausführungsformen der Brennkraftmaschine, bei denen der Abgaskrümmer zumindest teilweise im Zylinderkopf integriert ist.

Ein zumindest teilweise im Zylinderkopf integrierter Abgaskrümmer verkürzt die Gesamtwegstrecke und reduziert das Gewicht aller Abgasleitungen. Dadurch gestattet diese Krümmerart ein effektiveres Packaging im Motorraum und eine Reduzierung der thermischen Trägheit des Teilstücks der Abgasleitung zwischen den Auslaßöffnungen der Zylinder und dem Abgasnachbehandlungssystem bzw. zwischen den Auslaßöffnungen der Zylinder und der Turbine. Zudem wird durch die zumindest teilweise Integration des Abgaskrümmers das Abgasvolumen in den Abgasleitungen verkleinert, was zu einem verbesserten Ansprechverhalten führt, wenn gleichzeitig durch eine möglichst motornahe Anordnung der Turbine das Volumen zwischen den Zylindern und der Turbine minimiert wird.

In der Regel erfolgt die Zusammenführung der Abgasleitungen zu einer Gesamtabgasleitung stufenweise, wobei - wenn jeder Zylinder zwei oder mehr Auslaßöffnungen aufweist - zunächst die Abgasleitungen jedes Zylinders zu einer dem Zylinder zugehörigen Teilabgasleitung zusammengeführt werden, bevor diese Teilabgasleitungen der mindestens zwei Zylinder - eventuell wiederum stufenweise - zu einer Gesamtabgasleitung zusammenführen. Hat jeder Zylinder eine Auslaßöffnung, können auch die Abgasleitungen der Zylinder stufenweise zusammengeführt werden.

Die zumindest teilweise Integration des Abgaskrümmers im Zylinderkopf bedeutet im Rahmen der vorliegenden Erfindung, dass die Zusammenführung der Abgasleitungen zumindest teilweise noch im Zylinderkopf erfolgt.

Aus den genannten Gründen sind insbesondere Ausführungsformen der Brennkraftmaschine vorteilhaft, bei denen der Abgaskrümmer vollständig im Zylinderkopf integriert ist.

Vorteilhaft sind Ausführungsformen der Brennkraftmaschine, bei denen die Abgasleitungen stromaufwärts der Axialturbine zur Gesamtabgasleitung zusammenführen, wobei die Gesamtabgasleitung unter Ausbildung eines Eintrittsbereichs und eines Austrittsbereichs an die Turbine anschließt. Die Gesamtabgasleitung verläuft dabei stromaufwärts der Turbinen turbinenseitig vorzugsweise parallel zur Achse der Turbinenwelle.

In dem Fall, indem der Abgaskrümmer vollständig im Zylinderkopf integriert ist, führen die Abgasleitungen prinzipbedingt stromaufwärts der Axialturbine zur Gesamtabgasleitung zusammen, da das gesamte Abgas mittels Gesamtabgasleitung aus dem Zylinderkopf abgeführt wird.

Aber auch sonst ist die in Rede stehende Ausführungsform vorteilhaft, da die Gesamtwegstrecke aller Abgasleitungen verkürzt und ihr Gewicht reduziert wird, was zu den oben bereits genannten Vorteilen führt.

Vorteilhaft sind dabei Ausführungsformen der Brennkraftmaschine, bei denen die Gesamtabgasleitung stromaufwärts der Turbine höchstens eine Krümmung aufweist, so dass die Abgasströmung höchstens eine Richtungsänderung erfährt. Dies gewährleistet eine möglichst verlustarme Zuführung der Abgasströmung zur Turbine.

Vorteilhaft sind Ausführungsformen der Brennkraftmaschine, bei denen die Axialturbine eine mehrflutige Turbine ist, bei der der Eintrittsbereich mehrere Eintrittskanäle aufweist, in die gruppenweise zusammengefaßte Abgasleitungen der mindestens zwei Zylinder münden.

Mehrflutige Turbinen gestatten es, die Abgasleitungen der Zylinder gruppenweise zusammenzuführen und diese gruppenweise zusammengefaßten Abgasleitungen getrennt voneinander der Turbine zu zuführen. Dabei werden die Abgasleitungen vorzugsweise in der Art zusammengefaßt d. h. zusammengeführt, dass sich die dynamischen Wellenvorgänge in den Abgasleitungen nicht gegenseitig abschwächen. Hierzu verfügt die Brennkraftmaschine vorzugsweise über vier oder mehr Zylinder.

Wenn sich zu Beginn des Ladungswechsels das Auslaßventil öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgastrakt mit hoher Geschwindigkeit durch die Auslaßöffnung in das Abgassystem. Dieser druckgetriebene Strömungsvorgang wird durch eine hohe Druckspitze begleitet, die auch als Vorlastausstoß bezeichnet wird und sich entlang der Abgasleitungen mit Schallgeschwindigkeit fortpflanzt.

Werden die Abgasleitungen in der Weise gruppiert, dass die hohen Drücke, insbesondere die Vorlastausstöße erhalten werden können, eignet sich eine mehrflutige Axialturbine insbesondere für eine Stoßaufladung, womit auch hohe Turbinendruckverhältnisse bei niedrigen Drehzahlen erzielt werden können.

Vorteilhaft sind auch dabei Ausführungsformen der Brennkraftmaschine, bei denen die gruppenweise zusammengefaßten Abgasleitungen stromaufwärts der Turbine höchstens eine Krümmung aufweisen, so dass die Abgasströmungen höchstens eine Richtungsänderung erfahren.

Vorteilhaft sind Ausführungsformen der Brennkraftmaschine, bei denen im Eintrittsbereich Leitschaufeln zur Beeinflussung der Strömungsrichtung angeordnet sind. Im Gegensatz zu den Laufschaufeln des umlaufenden Laufrades rotieren die Leitschaufeln nicht mit der Welle der Turbine mit.

Verfügt die Turbine über eine feste unveränderliche Geometrie, sind die Leitschaufeln nicht nur stationär, sondern zudem völlig unbeweglich im Eintrittsbereich angeordnet d. h. starr fixiert. Wird hingegen eine Turbine mit variabler Geometrie eingesetzt, sind die Leitschaufeln zwar auch stationär angeordnet, aber nicht völlig unbeweglich, sondern um ihre Achse drehbar angeordnet, so dass auf die Anströmung der Laufschaufeln Einfluß genommen werden kann.

Vorteilhaft sind Ausführungsformen der Brennkraftmaschine, bei denen stromabwärts des Verdichters ein Ladeluftkühler in der Ansaugleitung angeordnet ist. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Im folgenden wird die Erfindung anhand der Figuren 1a, 1b, 2 und 3 näher beschrieben. Hierbei zeigt:
- Fig. 1a: schematisch eine erste Ausführungsform der Brennkraftmaschine,
- Fig. 1b: schematisch eine zweite Ausführungsform der Brennkraftmaschine,
- Fig. 2: schematisch eine dritte Ausführungsform der Brennkraftmaschine, und
- Fig. 3: schematisch eine Ausführungsform eines Abgasturboladers mit Axialturbine.

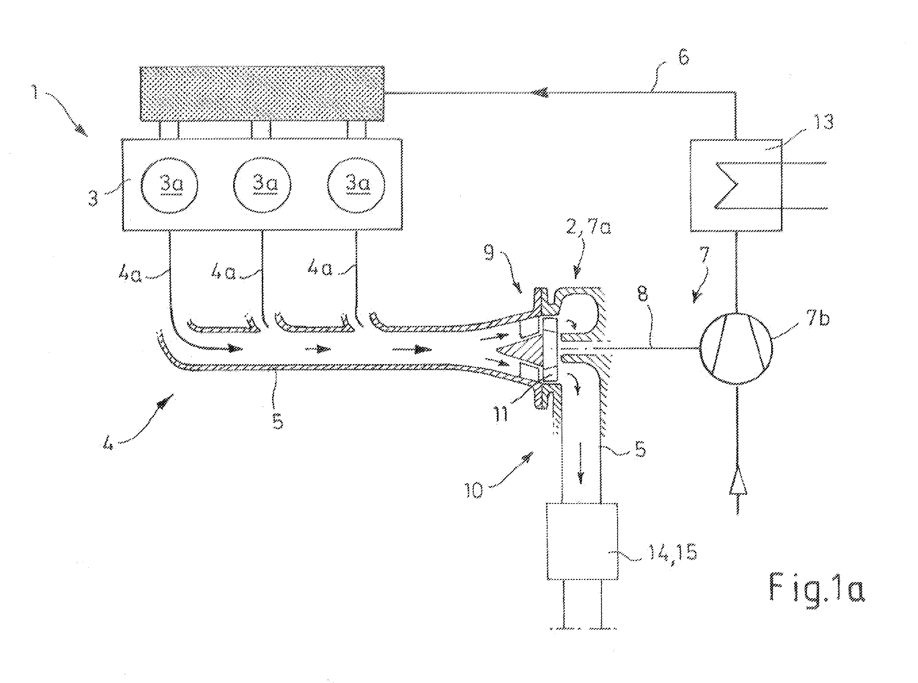

Figur 1a zeigt eine erste Ausführungsform der aufgeladenen Brennkraftmaschine 1 am Beispiel eines Drei-Zylinder-Motors.

Die Brennkraftmaschine 1 ist mit einem Abgasturbolader 7 ausgestattet, der eine Turbine 7a und einen in der Ansaugleitung 6 angeordneten Verdichter 7b umfaßt, wobei stromabwärts des Verdichters 7b ein Ladeluftkühler 13 in der Ansaugleitung 6 angeordnet ist.

Die drei im Zylinderkopf 3 befindlichen Zylinder 3a der Brennkraftmaschine 1 verfügen jeweils über eine Auslaßöffnung, an die sich eine Abgasleitung 4a zum Abführen der Abgase aus dem jeweiligen Zylinder 3a anschließt, wobei die Abgasleitungen 4a unter Ausbildung eines Abgaskrümmers 4 stromaufwärts der Turbine 7a zu einer Gesamtabgasleitung 5 zusammenführen.

Die Gesamtabgasleitung 5 verläuft turbinenseitig parallel bzw. koaxial zur Welle 8. Die Abgasleitungen 4a der Zylinder 3a weisen stromaufwärts der Turbine 7a nur eine Krümmung auf, so dass die Abgasströmungen nur eine Richtungsänderung erfahren. Dies gewährleistet eine möglichst verlustarme Zuführung des Abgases zur Turbine 7a.

Die Turbine 7a ist eine Axialturbine 2, bei der die Anströmung der Schaufeln des auf einer Welle 8 angeordneten Laufrades 11 im wesentlichen axial erfolgt.

Der Eintrittsbereich 9 der Axialturbine 2 zur Zuführung des Abgases ist koaxial zur Welle 8 der Axialturbine 2 ausgebildet, so dass die Zuströmung des Abgases zur Turbine 7a ebenfalls im wesentlichen axial erfolgt. Die Mittelachse des Eintrittsbereichs 9 fluchtet mit der Achse der Welle 8. Eine derartige Zuführung des Abgases zur Turbine 7a gewährleistet die Bereitstellung eines möglichst energiereichen Abgases an der Turbine 7a.

Der Austrittsbereich 10 der Axialturbine 2 zur Abführung des Abgases ist radial zur Welle 8 der Axialturbine 2 ausgebildet, so dass die Abströmung bzw. das Abführen des Abgases aus der Turbine 7a im wesentlichen radial bzw. vorliegend exakt radial erfolgt.

Stromaufwärts der Turbine 7a ist kein weiteres Aggregat angeordnet. Stromabwärts der Turbine 7a ist ein Abgasnachbehandlungssystem 14 angeordnet, wobei das Abgasnachbehandlungssystem 14 vorliegend ein Oxidationskatalysator 15 ist.

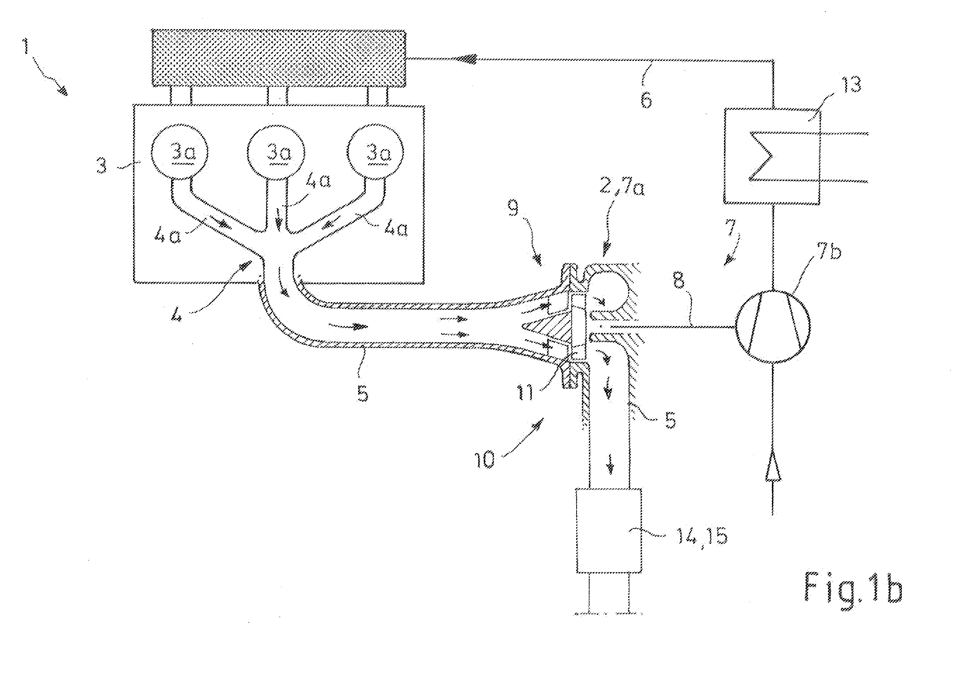

Figur 1b zeigt schematisch eine zweite Ausführungsform der aufgeladenen Brennkraftmaschine 1. Es sollen nur die Unterschiede zu der in Figur 1a dargestellten Ausführungsform erörtert werden, weshalb im übrigen bezug genommen wird auf Figur 1a. Für dieselben Bauteile wurden dieselben Bezugszeichen verwendet.

Im Unterschied zu der in Figur 1a dargestellten Ausführungsform ist bei der in Figur 1b dargestellten Brennkraftmaschine 1 der Abgaskrümmer 4 vollständig im Zylinderkopf 3 integriert d. h. die Zusammenführung der Abgasleitungen 4a zur einer Gesamtabgasleitung 5 erfolgt im Inneren des Zylinderkopfs 3.

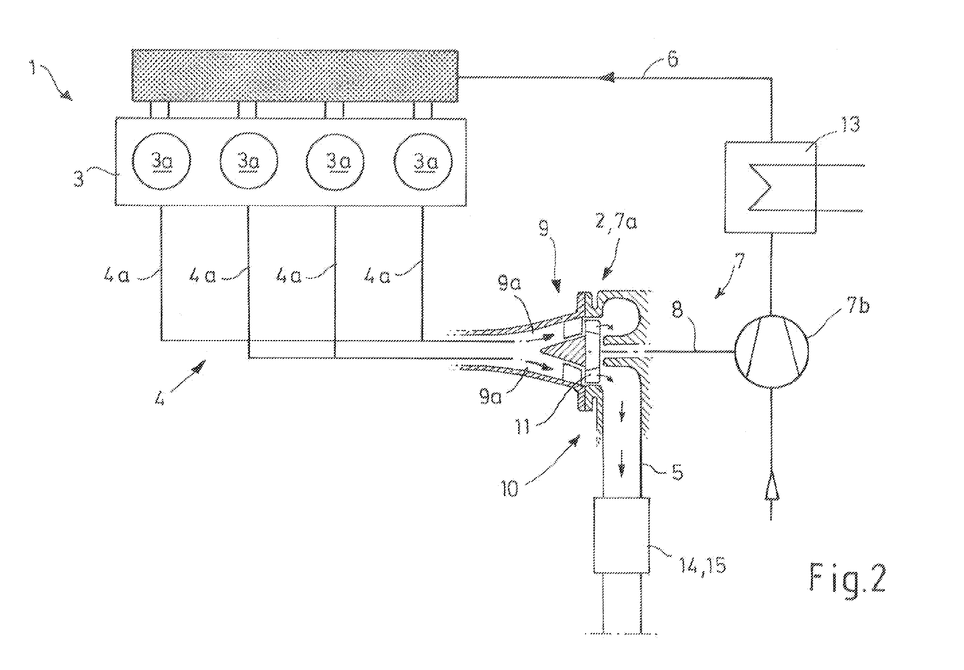

Figur 2 zeigt schematisch eine dritte Ausführungsform der aufgeladenen Brennkraftmaschine 1. Es sollen nur die Unterschiede zu der in Figur 1a dargestellten Ausführungsform erörtert werden, weshalb im übrigen bezug genommen wird auf Figur 1a. Für dieselben Bauteile wurden dieselben Bezugszeichen verwendet.

Im Unterschied zu der in Figur 1a dargestellten Ausführungsform verfügt die in Figur 2 dargestellte Brennkraftmaschine 1 über vier Zylinder 3a und eine zweiflutige Axialturbine 2, bei der der Eintrittsbereich 9 zwei voneinander getrennte Eintrittskanäle 9a aufweist.

Die Abgasleitungen 4a der vier Zylinder 3a sind gruppenweise - vorliegend paarweise - zusammengefaßt. Die beiden zusammengefaßten Abgasleitungen 4a münden in die zwei Eintrittskanäle 9a der Turbine 7a.

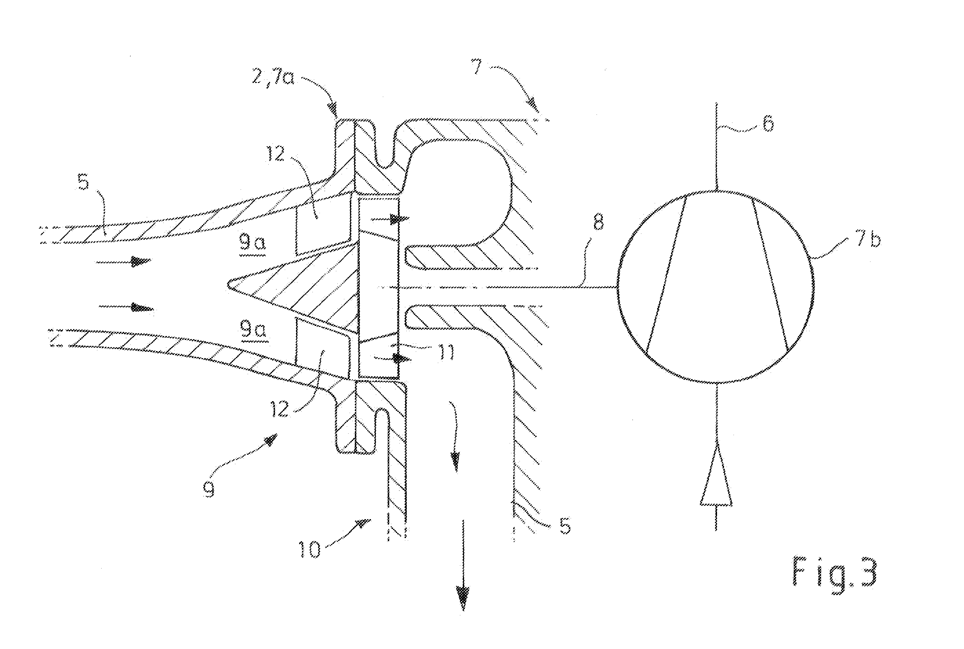

Figur 3 zeigt schematisch eine Ausführungsform eines Abgasturboladers 7 mit Axialturbine 2. Es wird bezug genommen auf Figur 1a bzw. Figur 2. Für dieselben Bauteile wurden dieselben Bezugszeichen verwendet.

Im Eintrittsbereich 9 der Axialturbine 2 sind Leitschaufeln 12 zur Beeinflussung der Strömungsrichtung angeordnet, welche stationär im Eintrittsbereich 9 angeordnet sind. Die Anströmung der Laufschaufeln 11 erfolgt axial.

### Bezugszeichen

- 1: aufgeladene Brennkraftmaschine
- 2: Axialturbine
- 3: Zylinderkopf
- 3 a: Zylinder
- 4: Abgaskrümmer
- 4a: Abgasleitung
- 5: Gesamtabgasleitung
- 6: Ansaugleitung
- 7: Abgasturbolader
- 7a: Turbine
- 7b: Verdichter
- 8: Welle
- 9: Eintrittsbereich
- 9a: Eintrittskanäle
- 10: Austrittsbereich
- 11: Laufrad
- 12: Leitschaufeln
- 13: Ladeluftkühler
- 14: Abgasnachbehandlungssystem
- 15: Oxidationskatalysator

## Patentansprüche

1. Aufgeladene Brennkraftmaschine (1) mit
■ einem Zylinderkopf (3) mit mindestens zwei Zylindern (3a), von denen jeder mindestens eine Auslaßöffnung aufweist, an die sich eine Abgasleitung (4a) zum Abführen der Abgase aus diesem Zylinder (3a) anschließt, wobei die Abgasleitungen (4a) der mindestens zwei Zylinder (3a) unter Ausbildung eines Abgaskrümmers (4) zu einer Gesamtabgasleitung (5) zusammenführen, und
■ mindestens einem Abgasturbolader (7), der eine Turbine (7a) umfaßt, welche ein auf einer Welle (8) vorgesehenes Laufrad (11), einen Eintrittsbereich (9) zur Zuführung des Abgases und einen Austrittsbereich (10) zur Abführung des Abgases aufweist,
**dadurch gekennzeichnet, dass**
■ die Turbine (7a) eine Axialturbine (2) ist, wobei der Eintrittsbereich (9) der Axialturbine (2) koaxial zur Welle (8) der Axialturbine (2) verläuft und ausgebildet ist, so dass die Zuströmung des Abgases zur Turbine (7a) im wesentlichen axial erfolgt, und
■ stromaufwärts der Turbine (7a) kein weiteres Aggregat angeordnet ist.

2. Aufgeladene Brennkraftmaschine (1) nach Anspruch 1, **dadurch gekennzeichnet, dass** der Austrittsbereich (10) der Axialturbine (2) im wesentlichen radial zur Welle (8) der Axialturbine (2) verläuft und ausgebildet ist, so dass die Abströmung des Abgases aus der Turbine (7a) im wesentlichen radial erfolgt.

3. Aufgeladene Brennkraftmaschine (1) nach Anspruch 1 oder 2, **dadurch gekennzeichnet, dass** stromabwärts der Axialturbine (2) ein Abgasnachbehandlungssystem (14) angeordnet ist.

4. Aufgeladene Brennkraftmaschine (1) nach Anspruch 3, **dadurch gekennzeichnet, dass** das Abgasnachbehandlungssystem (14) ein Oxidationskatalysator (15) ist.

5. Aufgeladene Brennkraftmaschine (1) nach einem der vorherigen Ansprüche, **dadurch gekennzeichnet, dass** der Abgaskrümmer (4) zumindest teilweise im Zylinderkopf (3) integriert ist.

6. Aufgeladene Brennkraftmaschine (1) nach einem der vorherigen Ansprüche, **dadurch gekennzeichnet, dass** der Abgaskrümmer (4) vollständig im Zylinderkopf (3) integriert ist.

7. Aufgeladene Brennkraftmaschine (1) nach einem der vorherigen Ansprüche, **dadurch gekennzeichnet, dass** die Abgasleitungen (4a) stromaufwärts der Axialturbine (2) zur Gesamtabgasleitung (5) zusammenführen, wobei die Gesamtabgasleitung (5) unter Ausbildung eines Eintrittsbereichs (9) und eines Austrittsbereichs (10) an die Turbine (7a) anschließt.

8. Aufgeladene Brennkraftmaschine (1) nach Anspruch 7, **dadurch gekennzeichnet, dass** die Gesamtabgasleitung (5) stromaufwärts der Turbine (7a) höchstens eine Krümmung aufweist, so dass die Abgasströmung höchstens eine Richtungsänderung erfährt.

9. Aufgeladene Brennkraftmaschine (1) nach einem der Ansprüche 1 bis 5, **dadurch gekennzeichnet, dass** die Axialturbine (2) eine mehrflutige Turbine (7a) ist, bei der der Eintrittsbereich (9) mehrere Eintrittskanäle aufweist, in die die gruppenweise zusammengefaßten Abgasleitungen (4a) der mindestens zwei Zylinder (3a) münden.

10. Aufgeladene Brennkraftmaschine (1) nach Anspruch 9, **dadurch gekennzeichnet, dass** die gruppenweise zusammengefaßten Abgasleitungen (4a) stromaufwärts der Turbine (7a) höchstens eine Krümmung aufweisen, so dass die Abgasströmungen höchstens eine Richtungsänderung erfahren.

11. Aufgeladene Brennkraftmaschine (1) nach einem der vorherigen Ansprüche, **dadurch gekennzeichnet, dass** im Eintrittsbereich (9) Leitschaufeln (12) zur Beeinflussung der Strömungsrichtung angeordnet sind.
